# EUROPEAN PATENT APPLICATION

(11) **EP 3 709 717 A1**
(43) Date of publication of application: **16.09.2020**
(21) Application number: 18876386.6
(22) Date of filing: 06.11.2018
(51) Int. Cl.: H04W 52/02, H04W 88/06, H04W 88/02

(54) **COMMUNICATION DEVICE, COMMUNICATION SYSTEM, AND PROGRAM**

(30) Priority: 09.11.2017 JP 2017216062
(71) Applicant: Panasonic Intellectual Property Management Co., Ltd., Osaka-shi, Osaka 540-6207 (JP)
(72) Inventor: NAKATSUKA, Yosuke, Osaka-shi, Osaka 540-6207 (JP); MOZUMI, Gon, Osaka-shi, Osaka 540-6207 (JP); SAKAMOTO, Koji, Osaka-shi, Osaka 540-6207 (JP)
(74) Representative: Appelt, Christian W.
(86) International application number: PCT/JP2018/041073
(87) International publication number: WO 2019/093286

(57) **Abstract**

Provided are a communications device, communications system, and program, all of which are configured or designed to make data transfer ready to start in a shorter time. A communications device (2) includes a first communications unit (211) and a second communications unit (212). The first communications unit (211) communicates wirelessly with a communications partner (1) by a first communication method. The second communications unit (212) communicates wirelessly with the communications partner (1) by a second communication method providing a higher transfer rate than the first communication method does. The second communications unit (212) has a power saving mode. In the power saving mode, power consumption per unit time is less than when data is transferred between the second communications unit (212) and the communications partner (1) and a link (32) is established between the second communications unit (212) and the communications partner (1). When the first communications unit (211) receives a communication request signal from the communications partner (1) while the second communications unit (212) is operating in the power saving mode, the communications device (2) starts performing data transfer between the second communications unit (212) and the communications partner (1).

## Description

### Technical Field

The present disclosure generally relates to a communications device, a communications system, and a program, and more particularly relates to a communications device for communicating wirelessly with a communications partner, a communications system including such a communications device, and a program.

### Background Art

Patent Literature 1 discloses a communications device including a plurality of wireless communications units. The communications device includes: a first communications unit (first wireless communications unit) for communicating wirelessly with a communications partner (another communications device); a second communications unit (second wireless communications unit) having a higher communication rate than the first communications unit; and a control unit.

In the communications device of Patent Literature 1, in response to a request to start the second communications unit that the first communications unit receives from the communications partner, the control unit supplies power to the second communications unit to start the second communications unit and establishes wireless communication with the communications partner via the second communications unit.

### Citation List

### Patent Literature

Patent Literature 1: JP 2010-273226 A

### Summary of Invention

In the communications device of Patent Literature 1, however, the second communications unit is not started, or no link (communications path) is established between the second communications unit and the communications partner, until the first communications unit receives the start request. That is to say, in this communications device, it is not until a link is established between the communications partner and the second communications unit that has been started in response to the start request that the first communications unit has received that data may be transferred from the second communications unit to the communications partner, and vice versa. Therefore, the time delay caused before data transfer is ready to start needs to be shortened.

In view of the foregoing background, it is therefore an object of the present disclosure to provide a communications device, communications system, and program, all of which are configured or designed to make the data transfer ready to start in a shorter time.

A communications device according to an aspect of the present disclosure includes a first communications unit and a second communications unit. The first communications unit communicates wirelessly with a communications partner by a first communication method. The second communications unit communicates wirelessly with the communications partner by a second communication method providing a higher transfer rate than the first communication method does. The second communications unit has a power saving mode. In the power saving mode, power consumption per unit time is less than when data is transferred between the second communications unit and the communications partner, and a link is established between the second communications unit and the communications partner. When the first communications unit receives a communication request signal from the communications partner while the second communications unit is operating in the power saving mode, the communications device starts performing data transfer processing of transferring data between the second communications unit and the communications partner.

A communications system according to another aspect of the present disclosure includes: the communications device described above: and the communications partner.

A program according to still another aspect of the present disclosure is designed to cause a computer system for controlling a communications device to perform data transfer processing when a first communications unit receives a communication request signal from a communications partner while a second communications unit is operating in a power saving mode. The data transfer processing is processing of transferring data between the second communications unit and the communications partner. The communications device includes: the first communications unit to communicate wirelessly with the communications partner by a first communication method; and the second communications unit to communicate wirelessly with the communications partner by a second communication method providing a higher transfer rate than the first communication method does. The second communications unit has a power saving mode in which power consumption per unit time is less than when data is transferred between the second communications unit and the communications partner and a link is established between the second communications unit and the communications partner.

### Brief Description of Drawings

FIG. 1 is a block diagram illustrating a configuration for a communications system according to a first embodiment;
FIG. 2 illustrates an overview of the communications system;
FIG. 3 is a flowchart showing a procedure in which a communications device operates in the communications system;
FIG. 4 is a timing diagram illustrating an exemplary operation to be performed by the communications system; and
FIG. 5 is a timing diagram illustrating another exemplary operation to be performed by the communications system.

### Description of Embodiments

### (First embodiment)

### (1) Overview of communications system

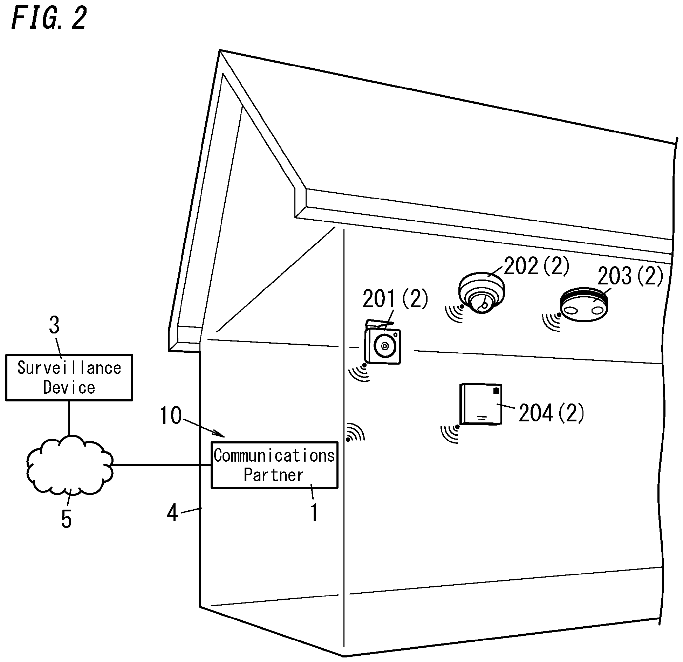

First of all, an overview of the communications system 10 according to this embodiment will be described with reference to FIG. 2.

A communications system 10 according to this embodiment includes a plurality of (e.g., four in the example illustrated in FIG. 2) communications devices 201, 202, ... and a single communications partner 1.

The communications partner 1 is configured to be able to communicate bidirectionally with the plurality of communications devices 201, 202, ... In addition, the communications partner 1 is also configured to be able to communicate with a surveillance device 3, which is provided separately from the plurality of communications devices 201, 202, The communications partner 1 is connected to the surveillance device 3 over a network 5 such as the Internet or a carrier network (such as a cellular phone network) provided by a communications provider. This allows the communications partner 1 to communicate with the surveillance device 3 over the network 5.

The communications partner 1 and the plurality of communications devices 201, 202, ... are installed in a building 4. On the other hand, the surveillance device 3 is installed at a location distant from the building 4, i.e., at a remote location with respect to the building 4. In the following description, the plurality of communications devices 201, 202, will be collectively hereinafter referred to as "communications devices 2" unless there is any particular need to distinguish the plurality of communications devices 201, 202, ... from each other. In the following description of embodiments, the surveillance device 3 is not supposed to be a constituent element of the communications system 10. However, this is only an example and should not be construed as limiting. Alternatively, the surveillance device 3 may be a constituent element of the communications system 10.

In this communications system 10, the communications devices 2 are used as "slave devices" and the communications partner 1 is used as a "master device." In other words, the communications system 10 includes at least one communications device 2 (as a slave device) and the communications partner 1 (as a master device) that communicates with the communications device 2. A wireless communication method using radio waves as a propagation medium is applied to the communication between the communications partner 1 and the communications device 2.

In the following description, the building 4 to which the communications system 10 is introduced is supposed to be a single-family dwelling house. However, the building 4 to which the communications system 10 is introduced does not have to be a single-family dwelling house but may also be a dwelling unit of a multi-family dwelling house or any other non-single-family dwelling house or may even be a non-dwelling house such as an office, a store, or a nursing care facility, for example.

In short, the communications partner 1 has the capability of communicating with each of the communications devices 2 installed in the same building 4 and the surveillance device 3 provided outside of the building 4. The communications partner 1 also has the capabilities of accepting commands entered by the user (who may be a resident of the building 4) and outputting various types of information as a text message displayed or a verbal message or sound emitted. In this embodiment, each of the communications devices 2 may function as a human detection sensor, a camera, a fire alarm, a temperature/humidity sensor, a window sensor, or an intercom, for example. This allows the communications partner 1 to monitor the circumstances inside the building 4 and/or control the communications devices 2 by communicating with the communications devices 2. In addition, if the communications partner 1 and the communications devices 2 have the intercom capabilities, then two users who are present at two remote locations inside the building 4 are able to speak to each other by transferring voice data bidirectionally between the communications partner 1 and one of the communications devices 2.

Furthermore, the communications partner 1 may also inform the surveillance device 3 of the status of any of the communications devices 2 and allow the surveillance device 3 to remotely control the communications devices 2 by communicating with the surveillance device 3. This allows even the surveillance device 3 outside of the building 4 to monitor the circumstances inside the building 4. In addition, if the surveillance device 3 and the communications devices 2 have the intercom capabilities, then the user inside the building 4 and an operator who is present at a remote location outside the building 4 are able to speak to each other by transferring voice data bidirectionally between the surveillance device 3 and the communications devices 2.

Optionally, the communications partner 1 may also be configured to be able to communicate with various types of telecommunications devices such as smartphones, tablet terminals, personal computers, and wearable terminals. This allows even a telecommunications device such as a smartphone, as well as the surveillance device 3, to monitor the status of the communications devices 2, remotely control the communications devices 2, and transfer voice data bidirectionally between the telecommunications device and the communications devices 2 by communicating with the communications partner 1.

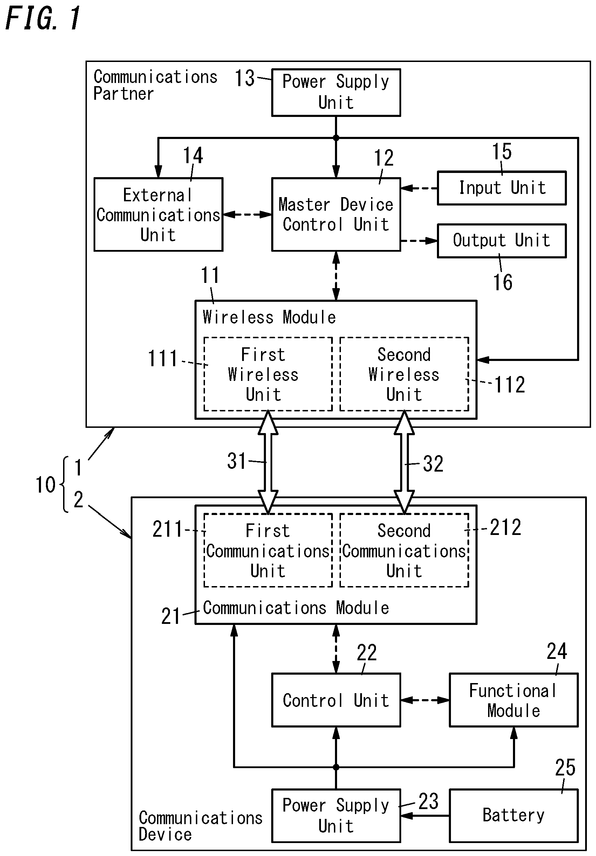

The communications partner 1 is activated with power supplied from an external power supply. As used herein, the external power supply may be a utility grid power supply (commercial power supply), or a distributed power supply such as a photovoltaic cell facility, for example. Each of the plurality of communications devices 2 is driven by a battery and activated when supplied with power from the battery 25 (see FIG. 1).

Each of the communications devices 2 with the human detection sensor capability detects the presence or absence of any human in a surveillance area (e.g., a residential room such as a living room) inside the building 4 and transmits, when detecting the presence of any human there, notification data to the communications partner 1. Each of the communications devices 2 with the camera capability captures video of a video capturing area inside the building 4 and transmits the video thus captured as video data to the communications partner 1. Each of the communications devices 2 with the fire alarm capability determines whether or not there is any outbreak of a fire inside the building 4 and transmits, when detecting any outbreak of a fire, notification data to the communications partner 1. Each of the communications devices 2 with the temperature/humidity sensor capability measures the temperature and humidity inside the building 4 and transmits the temperature and humidity thus measured as measurement data to the communications partner 1. Each of the communications devices 2 with the window sensor capability determines whether or not there is any opened window inside the building 4, and transmits, when detecting any opened window, notification data to the communications partner 1. Each of the communications devices 2 with the intercom capability has a loudspeaker and a microphone, and allows the users located at the communications device 2 and the surveillance device 3 to speak to each other via the communications partner 1 by transmitting and receiving audio data to/from the communications partner 1. Each of the communications devices 2 with the camera capability may include a microphone and may be configured to transmit audio data, along with the video data, to the communications partner 1.

In the example illustrated in FIG. 2, the communications device 201 has the human detection sensor capability, the communications device 202 has the camera capability, the communications device 203 has the fire alarm capability, and the communications device 204 has the temperature/humidity sensor capability. However, this is only an example and should not be construed as limiting. Alternatively, a plurality of communications devices 2 with the same capability may be provided. Still alternatively, air conditioners, light fixtures, and other types of devices may also be used as the communications devices 2.

Each of these communications devices 2 has not only the function of transmitting a signal to the communications partner 1 unidirectionally but also the function of receiving a signal from the communications partner 1. Examples of the signals that each of the communications devices 2 receives from the communications partner 1 include a signal for making alive check with respect to the communications device 2, a signal for inquiring about the status of the communications device 2, a signal for controlling the communications device 2, and a signal for changing the settings of the communications device 2.

Also, the surveillance device 3 is actually designed to monitor a group of buildings 4 as a group of targets. In that case, the respective communications partners 1 provided for the plurality of buildings 4 belonging to the group of targets communicate with the single surveillance device 3, and therefore, one-to-multiple communication needs to be established between the surveillance device 3 and the communications partners 1. In the following description, however, a situation where the target to be monitored by the surveillance device 3 is a single building 4, i.e., a situation where one-to-one communication needs to be established between the surveillance device 3 and the communications partner 1, will be described for the sake of simplicity.

In this embodiment, each communications device 2 for use as a slave device includes at least a first communications unit 211 and a second communications unit 212 as shown in FIG. 1.

The first communications unit 211 communicates wirelessly with the communications partner 1 by a first communication method. The second communications unit 212 communicates wirelessly with the communications partner 1 by a second communication method providing a higher transfer rate than the first communication method does.

As used herein, the "transfer rate" refers to the amount of data that may be transferred per unit time. The higher the transfer rate is, the greater the amount of data to be transferred per unit time is. That is why to transfer data with a large data size such as audio data or video data, the second communications unit 212 is preferred to the first communications unit 211.

That is to say, each communications device 2 (slave device) according to this embodiment includes two communications units, namely, the first communications unit 211 and the second communications unit 212, to communicate with the communications partner 1 (master device). Each of the first communications unit 211 and the second communications unit 212 communicates with the communications partner 1 via wireless communication. However, the first communications unit 211 and the second communications unit 212 use two different communication methods. The second communication method that the second communications unit 212 uses allows data to be transferred at a higher transfer rate than the first communication method that the first communications unit 211 uses. Thus, using the second communications unit 212 allows the communications device 2 to transfer data at an increased rate between the communications device 2 itself and the communications partner 1.

Also, the second communications unit 212 has a power saving mode. In the power saving mode, power consumption per unit time is less than when data is transferred between the second communications unit 212 and the communications partner 1, and a link 32 is established between the second communications unit 212 and the communications partner 1. That is to say, while the second communications unit 212 is operating in the power saving mode, the power consumption is cut down compared to a situation where data is transferred between the second communications unit 212 and the communications partner 1, and the link 32 continues to be established between the second communications unit 212 and the communications partner 1.

As used herein, the "link" refers to a communications path established between a plurality of nodes (such as the communications partner 1 and the communications devices 2) that form a communications network. In this case, the state where the link 32 is established between the second communications unit 212 and the communications partner 1 refers herein to a state where radio waves are physically transmitted and received between the second communications unit 212 and the communications partner 1. That is to say, the state where the link 32 is established refers herein to a state where data may be transmitted from the second communications unit 212 to the communications partner 1, and vice versa. Thus, a state where data may be transferred bidirectionally between the second communications unit 212 and the communications partner 1 corresponds to the state where the link 32 is established. On the other hand, the standby state of the second communications unit 212, i.e., the state where the second communications unit 212 is just able to receive a signal unidirectionally from the communications partner 1 corresponds to the state where the link 32 has not been established yet (i.e., the state where the link 32 has been cut off). In FIG. 1, a link 31 between the first communications unit 211 and the communications partner 1 and the link 32 between the second communications unit 212 and the communications partner 1 are illustrated. Note that these links 31 and 32 are illustrated there just for the sake of description and are actually insubstantial ones.

In this case, the communications device 2 performs data transfer processing when the first communications unit 211 receives a communication request signal from the communications partner 1 while the second communications unit 212 is operating in the power saving mode. The data transfer processing is processing of transferring data between the second communications unit 212 and the communications partner 1. In other words, while the second communications unit 212 is operating in the power saving mode, the communications device 2 does not allow the second communications unit 212 to start performing the data transfer processing until the first communications unit 211 receives the communication request signal. Thus, the communications device 2 is able to cut down the power consumption of the second communications unit 212 by making the second communications unit 212 operate basically in the power saving mode and perform the data transfer processing only when required.

Furthermore, the communications device 2 keeps the link 32 established between the second communications unit 212 and the communications partner 1 even while the second communications unit 212 is operating in the power saving mode. This eliminates the need for the communications device 2 to perform the processing of establishing the link 32 between the second communications unit 212 and the communications partner 1 after the first communications unit 211 has received a communication request signal from the communications partner 1 while the second communications unit 212 is operating in the power saving mode. This allows the communications device 2 to shorten the time delay caused to make the second communications unit 212 ready to start the data transfer processing since the first communications unit 211 has received the communication request signal from the communications partner 1.

Consequently, the communications device 2 is able to cut down the power consumption of the second communications unit 212 and to make the data transfer ready to start in a shorter time while increasing the data transfer rate using the second communications unit 212.

### (2) Configuration for master device

Next, a specific configuration for the communications partner 1 used as a master device in the communications system 10 according to this embodiment will be described with reference to FIG. 1.

As shown in FIG. 1, the communications partner 1 includes a wireless module 11, a master device control unit 12, a power supply unit 13, an external communications unit 14, an input unit 15, and an output unit 16.

The wireless module 11 is a module for establishing wireless communication with the communications device 2. The wireless module 11 includes a first wireless unit 111 and a second wireless unit 112. The first wireless unit 111 communicates wirelessly with the communications device 2 (more exactly, the first communications unit 211 thereof) by the first communication method. The second wireless unit 112 communicates wirelessly with the communications device 2 (more exactly, the second communications unit 212 thereof) by the second communication method providing a higher transfer rate than the first communication method. That is to say, since the first communication method and the second communication method are used as the methods of communication between the communications partner 1 and the communications device 2 as described above, the first wireless unit 111 and the second wireless unit 112 corresponding to the first communication method and the second communication method, respectively, are provided for the communications partner 1.

In this embodiment, each of the first wireless unit 111 and the second wireless unit 112 transmits and receives signals to/from the communications device 2. This allows the wireless module 11 to transfer data bidirectionally between the wireless module 11 itself and the communications device 2, no matter whether the communication method adopted is the first communication method or the second communication method.

In this embodiment, the first communication method that the first wireless unit 111 uses may be compliant with a low power radio standard that requires no licenses, for example. As for this type of low power radio, the frequency band, antenna power, and other specific parameters to be adopted according to the intended use are defined in respective countries. In Japan, for example, a low power radio standard that requires the use of radio waves on the 420 MHz band or the 920 MHz band is defined. In the following description, devices that use such low power radio standards will be hereinafter referred to as "short range devices (SRD)."

On the other hand, the second communication method that the second wireless unit 112 uses may be a communication method compliant with the Wi-Fi® standard, for example. The second communication method provides a higher data transfer rate than the first communication method does, as described above. In general, the second communication method such as this increases the power consumption of the wireless module 11 compared to the first communication method. Therefore, comparing the communication between the first wireless unit 111 and the communications device 2 with the communication between the second wireless unit 112 and the communications device 2, the communication between the second wireless unit 112 and the communications device 2 increases the power consumption of the wireless module 11. In other words, the first communication method causes lower power consumption than the second communication method does.

Furthermore, in this embodiment, the communication ranges (or communicable ranges) by the first communication method and the second communication method are approximately equal to each other. That is to say, in the communications partner 1, the communication range of the first wireless unit 111 communicating with the communications device 2 and the communication range of the second wireless unit 112 communicating with the communications device 2 are set at approximately equal values. Thus, if the first wireless unit 111 of the communications partner 1 is able to communicate with one communications device 2, then the second wireless unit 112 thereof should also be able to communicate with that communications device 2.

The master device control unit 12 controls the wireless module 11, the external communications unit 14, the input unit 15, and the output unit 16. In this embodiment, the master device control unit 12 is implemented as a microcomputer including, as major constituent elements, a processor and a memory. In other words, the master device control unit 12 is implemented as a computer system including a processor and a memory. The processor serves as the master device control unit 12 by executing a program stored in the memory. The program may be stored in advance in the memory of the master device control unit 12. Alternatively, the program may also be downloaded via a telecommunications line such as the Internet or distributed after having been stored on a non-transitory storage medium such as a memory card.

The power supply unit 13 is supplied with power from an external power supply and delivers operating power to the wireless module 11, the master device control unit 12, the external communications unit 14, and other units.

The external communications unit 14 is a communications module for communicating with the surveillance device 3 (see FIG. 2). In this embodiment, the external communications unit 14 transmits and receives signals to/from the surveillance device 3. This allows the external communications unit 14 to transfer data bidirectionally between the external communications unit 14 itself and the surveillance device 3. In this embodiment, the communication between the external communications unit 14 and the surveillance device 3 may be wired communication, for example.

The input unit 15 is connected to an operating unit such as an operating button or a touchscreen panel. The input unit 15 delivers an input signal, representing a command entered by the user through the operating unit, to the master device control unit 12. The output unit 16 is connected to a display unit or an audio output unit, for example, to receive an output signal of the master device control unit 12 and display various types of information on the display unit or output audio data through the audio output unit.

### (3) Configuration for slave devices

Next, a specific configuration for the communications devices 2 for use as slave devices in the communications system 10 according to this embodiment will be described with reference to FIG. 1. Although only one of the plurality of communications devices 2 is illustrated in FIG. 1, the other communications devices 2 also have the same configuration.

As shown in FIG. 1, the communications device 2 includes a communications module 21, a control unit 22, a power supply unit 23, a functional module 24, and a battery 25.

The communications module 21 is a module for establishing wireless communication with the communications partner 1. The communications module 21 includes the first communications unit 211 and the second communications unit 212. The first communications unit 211 communicates wirelessly with the communications partner 1 (more exactly, the first wireless unit 111 thereof) by the first communication method (which may be SRD in this embodiment). The second communications unit 212 communicates wirelessly with the communications partner 1 (more exactly, the second wireless unit 112 thereof) by the second communication method (compliant with the Wi-Fi® in this embodiment) providing a higher transfer rate than the first communication method. That is to say, since the first communication method and the second communication method are used as the methods of communication between the communications partner 1 and the communications device 2 as described above, the first communications unit 211 and second communications unit 212 corresponding to the first communication method and the second communication method, respectively, are provided for the communications device 2.

In this embodiment, each of the first communications unit 211 and the second communications unit 212 transmits and receives signals to/from the communications partner 1. This allows the communications module 21 to transfer data bidirectionally between the communications module 21 itself and the communications partner 1, no matter whether the communication method adopted is the first communication method or the second communication method.

FIG. 1 illustrates a state where a (first) link 31 has been established between the first communications unit 211 and the first wireless unit 111 of the communications partner 1. With the link 31 established, data may be transferred bidirectionally between the first communications unit 211 and the first wireless unit 111. According to this embodiment, when the communications device 2 is started, the first communications unit 211 is also started automatically to establish the link 31 between the first communications unit 211 itself and the first wireless unit 111 of the communications partner 1. FIG. 1 also illustrates a state where a (second) link 32 has been established between the second communications unit 212 and the second wireless unit 112 of the communications partner 1. With the link 32 established, data may be transferred bidirectionally between the second communications unit 212 and the second wireless unit 112. According to this embodiment, when the communications device 2 is started, the second communications unit 212 is also started automatically to establish the link 32 between the second communications unit 212 itself and the second wireless unit 112 of the communications partner 1.

In general, the second communication method increases the power consumption of the wireless module 11 compared to the first communication method. Therefore, comparing the communication between the first communications unit 211 and the communications partner 1 with the communication between the second communications unit 212 and the communications partner 1, the communication between the second communications unit 212 and the communications partner 1 increases the power consumption of the communications module 21. In other words, the first communication method causes lower power consumption than the second communication method does.

In this case, when a large amount of data such as audio data or video data is transferred between the communications partner 1 and the communications device 2, the second communication method is used, out of the first communication method and the second communication method. Thus, in a state where the link 32 between the second wireless unit 112 and the second communications unit 212 is cut off, the function of transferring audio data, video data, or any other data of a large size (including a call function) between the communications partner 1 and the communications device 2 is disabled. In other words, only when the link 32 is established between the second wireless unit 112 and the second communications unit 212, the function of transferring audio data, video data, or any other data of a large size (including a call function) between the communications partner 1 and the communications device 2 is enabled.

In this embodiment, the operation modes of the second communications unit 212 include a power saving mode and a normal mode. The normal mode is an operation mode in which the power consumption per unit time is larger than in the power saving mode. That is to say, the operation mode of the second communications unit 212 may be changed between at least two modes, namely, the normal mode and the power saving mode in which the power consumption is reducible compared to the normal mode.

In this embodiment, the second communication method applied to the second communications unit 212 is compliant with the Wi-Fi® standard, and therefore, the operation modes of the second communications unit 212 include two types, namely, an active mode and a power save mode. That is to say, while a communications device (station) compliant with the Wi-Fi® standard is operating in the active mode, its transmitter-receiver circuit is always supplied with power. On the other hand, while the communications device is operating in the power save mode, its transmitter-receiver circuit intermittently enters an asleep state to have its power consumption reduced. In this case, the active mode corresponds to the normal mode and the power save mode corresponds to the power saving mode.

Next, the active mode and power save mode of a communications device (station) communicating with the communications partner (access point) will be described as being applied to a general communication compliant with the Wi-Fi® standard.

Basically, when no data transfer is performed for a certain amount of time between the communications device and the communications partner, the operation mode of the communications device changes from the active mode to the power save mode. When operating in the power save mode, the communications device is not always able to receive data. Thus, the communications partner transmits beacon signals to the communications device at certain time intervals. In that case, the communications device receives the beacon signals from the communications partner in awake periods, which are set intermittently. That is to say, the communications device operating in the power save mode periodically alternates between the awake state and the asleep state.

If the communications partner has any data addressed to the communications device operating in the power save mode, then the communications device receives a notification to that effect in the form of a traffic indication map (TIM) included in the beacon signal. On receiving the notification in the form of the TIM, the communications device performs power save polling (PS-poll) to receive data from the communications partner.

Furthermore, when making a transition from the active mode to the power save mode, the communications device transmits a signal with a PM bit of one to the communications partner. On the other hand, when making a transition from the power save mode to the active mode, the communications device transmits a signal with a PM bit of zero to the communications partner (access point). This allows the communications partner to share the operation mode (which may be either the active mode or the power save mode) of the communications device.

If the description about the general communication compliant with the Wi-Fi® standard is applied to the communications device 2 according to this embodiment, then the second communications unit 212 receives the signals from the communications partner in second reception periods, which are set regularly at second time intervals, while operating in the power saving mode. In this case, the awake periods mentioned above correspond to the second reception periods and the interval between the awake periods corresponds to the second time interval.

The control unit 22 controls the communications module 21, the functional module 24, and other units. In this embodiment, the control unit 22 is implemented as a microcomputer including, as major constituent elements, a processor and a memory. In other words, the control unit 22 is implemented as a computer system including a processor and a memory. The processor serves as the control unit 22 by executing a program stored in the memory. The program may be stored in advance in the memory of the control unit 22. Alternatively, the program may also be downloaded via a telecommunications line such as the Internet or distributed after having been stored on a non-transitory storage medium such as a memory card.

Furthermore, authentication information and other types of information for use to establish the links 31 and 32 are saved in the memory of the control unit 22. As used herein, the "authentication information" is a piece of information about the communication between the first communications unit 211 and the second communications unit 212 and is information that needs to be collected to establish the links 31 and 32 between the first communications unit 211, the second communications unit 212, and the communications partner 1. Specifically, the authentication information is information including identification (ID) and key information.

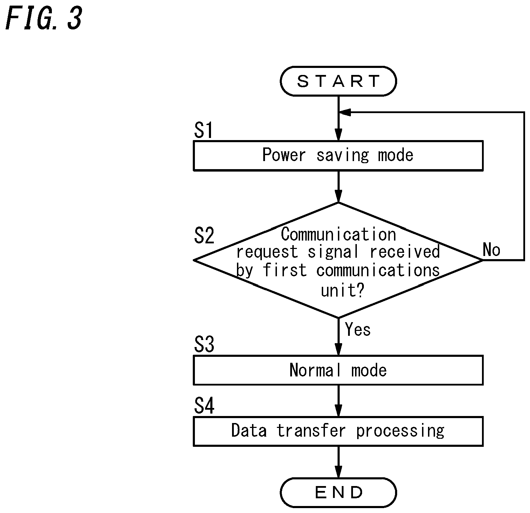

In this embodiment, the control unit 22 controls the communications module 21 so as to realize at least the operation shown in FIG. 3. Specifically, while the second communications unit 212 is operating in the power saving mode (in S1), the control unit 22 determines whether or not the first communications unit 211 receives a communication request signal from the communications partner 1 (in S2). In this case, if the first communications unit 211 does not receive the communication request signal (if the answer is NO in S2), the process performed by the control unit 22 goes back to the processing step S1. On the other hand, if the first communications unit 211 receives the communication request signal (if the answer is YES in S2), then the control unit 22 changes the operation mode of the second communications unit 212 from the power saving mode to the normal mode (in S3) to have the data transfer processing performed (in S4). The data transfer processing is processing of transferring data between the second communications unit 212 and the communications partner 1. Thus, when the first communications unit 211 receives the communication request signal from the communications partner 1 while the second communications unit 212 is operating in the power saving mode, the second communications unit 212 changes its operation mode to the normal mode. Then, in the period during which the second communications unit 212 is operating in the normal mode, data transfer is carried out between the second communications unit 212 and the communications partner 1.

In addition, the control unit 22 also has the capability of controlling the second communications unit 212 to change the operation mode of the second communications unit 212 from the normal mode to the power saving mode. Specifically, when the data transfer is completed between the second communications unit 212 and the communications partner 1, or a predetermined amount of time passes, since the first communications unit 211 has received the communication request signal from the communications partner 1, the control unit 22 changes the operation mode of the second communications unit 212 to the power saving mode.

The power supply unit 23 is supplied with power from the battery 25 and delivers operating power to the communications module 21, the control unit 22, the functional module 24, and other units. The battery 25 may be implemented as either a primary battery or secondary battery housed in the housing of the communications device 2. The battery 25 may or may not be a constituent element of the communications device 2.

The functional module 24 is a module for performing various functions of the communications device 2 other than the communication with the communications partner 1. For example, if the communications device 2 has the intercom capability, then the functional module 24 has the function of an intercom. If the communications device 2 has the capability of a sensor such as a human detection sensor, then the functional module 24 has the function of the sensor. In other words, the communications device 2 is configured to have not only the functions of the functional module 24 but also the function of communicating with the communications partner 1.

### (4) Operation

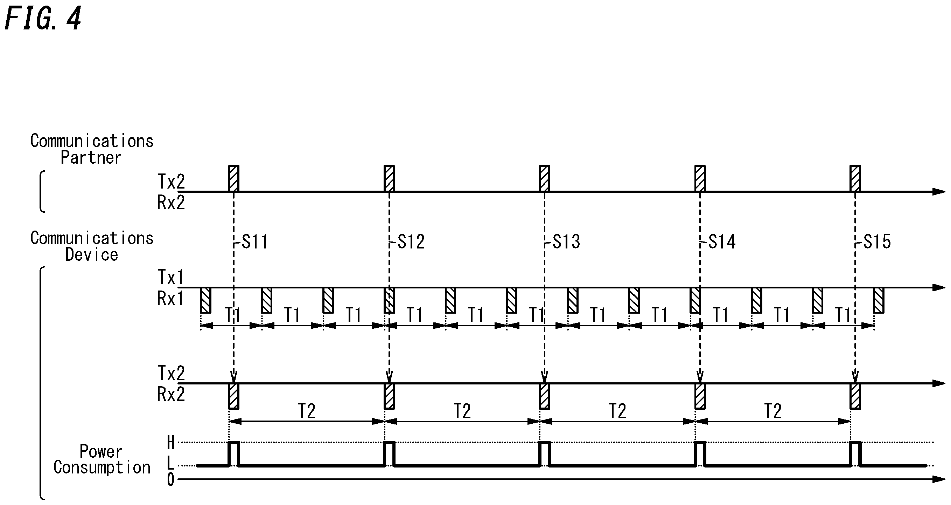

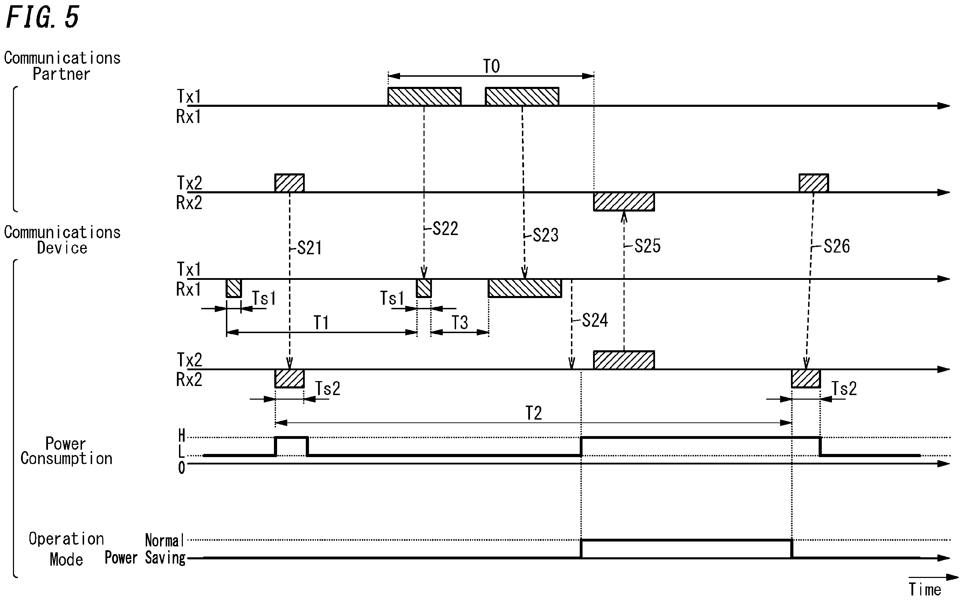

Next, it will be described with reference to FIGS. 4 and 5 how the communications device 2 (slave device) according to this embodiment and the communications system 10 including the communications device 2 operate. In the following description, it will be described, as an example, how the communications system 10 operates while video data is transmitted from the communications device 2 to the communications partner 1 in a situation where an event "video delivery" has been generated at the communications partner 1. As used herein, "video delivery" refers to an event that the communications partner 1 receives video delivered from the communications device 2. The video delivery may be triggered by supply of a predetermined input signal to the input unit 15, for example.

In FIGS. 4 and 5, the operations of respective nodes (including the communications partner 1 and the communications device 2) are shown time-sequentially with the abscissa indicating the time axis. Specifically, in FIG. 4, the operation of the second wireless unit 112 of the communications partner 1, the operation of the first communications unit 211 of the communications device 2, the operation of the second communications unit 212, and the power consumption of the second communications unit 212 are shown from top to bottom. In FIG. 5, the operation of the first wireless unit 111 of the communications partner 1, the operation of the second wireless unit 112, the operation of the first communications unit 211 of the communications device 2, the operation of the second communications unit 212, the power consumption of the second communications unit 212, and the operation mode of the second communications unit 212 are shown from top to bottom. In the following description, as for the operation of the first wireless unit 111 and the first communications unit 211, their transmission operation is indicated by Tx1 and their reception operation is indicated by Rx1 (where the hatching indicates that the operation is going on). Likewise, as for the operation of the second wireless unit 112 and the second communications unit 212, their transmission operation is indicated by Tx2 and their reception operation is indicated by Rx2 (where the hatching indicates that the operation is going on).

FIG. 4 shows how the communications system 10 operates in a steady state where no event has occurred. In the example illustrated in FIG. 4, the second communications unit 212 of the communications device 2 is operating in the power saving mode. Thus, the second wireless unit 112 of the communications partner 1 transmits beacon signals at regular intervals to the second communications unit 212 (in S11-S15). Thus, the second communications unit 212 of the communications device 2 receives the beacon signals from the communications partner 1 in the second reception periods Ts2 (see FIG. 5) that are set regularly at the second time intervals T2. That is to say, the second communications unit 212 performs the reception operation intermittently in sync with transmissions of the beacon signals from the communications partner 1.

As a result, while the second communications unit 212 is operating in the power saving mode, the power consumption of the second communications unit 212 increases in the second reception periods Ts2 in which the reception operation is performed. Therefore, the power consumption of the second communications unit 212 alternately goes H (High) and L (low) repeatedly. On the other hand, when data is transferred between the second communications unit 212 and the communications partner 1, the power consumption of the second communications unit 212 becomes equal to or greater than the H (High) level. Thus, the power consumption per unit time of the second communications unit 212 operating in the power saving mode is lower than when the second communications unit 212 is transferring data between the second communications unit 212 itself and the communications partner 1.

Also, the first communications unit 211 of the communications device 2 receives the signals from the communications partner 1 in the first reception periods Ts1 (see FIG. 5) that are set periodically at the first time intervals T1. The first time interval T1 is shorter than the second time interval T2 (i.e., T1 < T2). That is to say, the first communications unit 211 performs the reception operation intermittently at shorter time intervals than the second communications unit 212. In other words, the first communications unit 211 performs the reception operation more frequently than the second communications unit 212. Nevertheless, since the power consumption of the first communications unit 211 is less than the power consumption of the second communications unit 212 as described above, the increase in power consumption to be caused by the reception operation by the first communications unit 211 is relatively insignificant for the overall communications module 21.

In addition, in each of the first reception periods Ts1, the first communications unit 211 determines whether or not any signal has come from the communications partner 1. If any signal has been received from the communications partner 1 during the first reception interval Ts1, data will be received from the communications partner 1 in a predetermined time T3 (see FIG. 5) after the end of the first reception period Ts1. That is to say, in the first reception periods Ts1 to be set regularly at the first time intervals T1, the first communications unit 211 just determines whether or not any signal has come from the communications partner 1, and does not receive data from the communications partner 1. Specifically, in each of the first reception periods Ts1, the first communications unit 211 checks radio waves and determines, by seeing if the received signal strength indicator (RSSI) at the first communications unit 211 is equal to or greater than a threshold value, whether or not any signal has come from the communications partner 1. In this case, when finding the received signal strength indicator equal to or greater than the threshold value, the first communications unit 211 determines that a signal should have been received from the communications partner 1 and will receive data from the communications partner 1 in the predetermined time T3 after the end of the first reception period Ts1.

In this case, the predetermined time T3 is suitably shorter than the first time interval T1 (i.e., T3 < T1). For example, the first time interval T1 may be 3 seconds, and the predetermined time T3 may be 1 second. Alternatively, the predetermined time T3 may be 0 seconds. In that case, the first communications unit 211 receives data from the communications partner 1 immediately after the first reception period Ts1 in which the first communications unit 211 has determined that a signal should have come from the communications partner 1.

In the communications system 10 according to this embodiment, each of the first communications unit 211 and the second communications unit 212 performs the reception operation intermittently, thus cutting down the power consumption of the first communications unit 211 and the second communications unit 212 compared to when the first communications unit 211 and the second communications unit 212 perform the reception operation continuously. In addition, since the first communications unit 211 and the second communications unit 212 keep up communication with the communications partner 1 albeit intermittently, the links 31 and 32 are kept established between the communications partner 1 and the communications device 2.

On the other hand, FIG. 5 illustrates how the communications system 10 operates in a situation where an event has occurred. While operating in the power saving mode, the second communications unit 212 of the communications device 2 receives the beacon signals from the communications partner 1 in the second reception periods Ts2 that are set regularly at the second time intervals T2 as in the example illustrated in FIG. 4 (in S21 and S26).

In this case, when the event "video delivery" occurs in the communications partner 1, the communications partner 1 makes the first wireless unit 111 transmit a communication request signal (in S22). The communication request signal is a signal requesting the communications device 2 to communicate by the second communication method. In this embodiment, the communication request signal includes a control command. The control command may be a command specifying the type of the event (that is "video delivery" in this example). The first communications unit 211 of the communications device 2 receives the communication request signal from the communications partner 1 in the first reception periods Ts1 that are set regularly at the first time intervals T1 (in S22).

Nevertheless, in this embodiment, the first communications unit 211 just determines, in each of the first reception periods Ts1, whether or not any signal has come from the communications partner 1 and does not receive data from the communications partner 1. Therefore, the first communications unit 211 receives the communication request signal that has been re-transmitted from the communications partner 1 in the predetermined time T3 after the end of the first reception period Ts1 in which the communication request signal has been received from the communications partner 1 (in S23).

The communications device 2, which has received the communication request signal at the first communications unit 211, transfers a control command included in the communication request signal from the first communications unit 211 to the second communications unit 212 (in S24). On receiving the control command, the second communications unit 212 changes its operation mode from the power saving mode to the normal mode. This change of the operation mode of the second communications unit 212 into the normal mode increases the power consumption of the second communications unit 212 compared to the period in which the second communications unit 212 is operating in the power saving mode.

When starting to operate in the normal mode, the second communications unit 212 performs the data transfer processing of transferring data to (the second wireless unit 112 of) the communications partner 1 (in S25). In performing the data transfer processing, the second communications unit 212 transfers data to (the second wireless unit 112 of) the communications partner 1 in accordance with the control command. Since the event is "video delivery" in this example, the second communications unit 212 transfers video data to (the second wireless unit 112 of) the communications partner 1. In this manner, the second communications unit 212 transmits response data (e.g., video data in this example) in accordance with the control command included in the communication request signal to the communications partner 1 in performing the data transfer processing.

After the data transfer processing is finished, the operation mode of the second communications unit 212 changes into the power saving mode when the second reception period Ts2 begins for the first time since then. However, the operation mode of the second communications unit 212 does not have to be changed into the power saving mode at the timing illustrated in FIG. 5. Alternatively, the operation mode of the second communications unit 212 may change into the power saving mode when no data is transferred between the second communications unit 212 and the second wireless unit 112 for a certain period of time since the end of the data transfer processing.

The communications system 10 that operates as described above is able to shorten the amount of time (hereinafter referred to as "response time") T0 it takes for the second communications unit 212 to start the data transfer processing since a point in time when the even occurred (i.e., since the communication request signal started to be transmitted). That is to say, in the communications system 10 described above, with the link 32 kept established between the second communications unit 212 and the communications partner 1, the communications device 2 waits for the communication request signal to arrive. This allows the communications system 10 to start performing the data transfer processing in a shorter time since the reception of the communication request signal. That is to say, the communications system 10 eliminates the need to perform the processing of starting the second communications unit 212 or the processing of establishing the link 32 between the second communications unit 212 and the communications partner 1 after the communications device 2 has received the communication request signal. This shortens the response time T0.

In the embodiment described above, a series of operations of transmitting data (such as video data) from the communications device 2 to the communications partner 1 is started (i.e., triggered) by the supply of a predetermined input signal to the input unit 15 of the communications partner 1. However, this is only an example and should not be construed as limiting. Alternatively, in this communications system 10, the series of operations of transmitting data from the communications device 2 to the communications partner 1 may be triggered by any other type of stimulus applied to the communications device 2. For example, if the communications device 2 includes an operating unit such as an operating button or a touchscreen panel, an input signal generated by the entry of a user command through the operating unit may trigger the series of operations of transmitting data from the communications device 2 to the communications partner 1.

### (5) Comparative example

Next, it will be described, as a comparative example, what if the communications device 2 does not include the first communications unit 211. In the comparative example, while the second communications unit 212 is operating in the power saving mode, the communications device 2 just receives the beacon signals from the communications partner 1 in the second reception periods Ts2 that are set regularly at the second time intervals T2. Thus, to acquire data from the communications device 2, the communications partner 1 first needs to notify the communications device 2 with the beacon signals in the second reception periods Ts2 and then transmit a control command to the communications device 2 in response to the polling from the communications device 2. Thereafter, the communications device 2, which has received the control command, makes the second communications unit 212 transfer data (such as video data) to the communications partner 1 in accordance with the control command. Thus, in this comparative example, the second time interval T2 may be shortened to shorten the response time. Shortening the second time interval T2, however, causes an increase in power consumption per unit time of the communications device 2. On the other hand, extending the second time interval T2 reduces the power consumption per unit time of the communications device 2 but makes the response time longer.

In contrast, in the communications system 10 according to this embodiment, the first communications unit 211 having smaller power consumption than the second communications unit 212 waits for the communication request signal to arrive as described above, thus cutting down the power consumption per unit time of the communications device 2. In addition, the data transfer processing by the second communications unit 212 is triggered by the reception of the communication request signal at the first communications unit 211, and therefore, the length of the second time interval T2 does not affect the response time T0. This allows the communications system 10 according to this embodiment to shorten the response time T0 while cutting down the power consumption per unit time of the communications device 2 by extending the second time interval T2.

### (6) Variations

The first embodiment described above is only one of various embodiments of the present disclosure and may be readily modified in various manners depending on a design choice or any other factor, without departing from the scope of the present disclosure. Also, the same function as that of the control unit 22 of the communications device 2 may also be implemented as a method for controlling the communications device 2, a (computer) program, or a non-transitory storage medium that stores the program thereon, for example. A program according to an aspect is designed to cause a computer system for controlling a communications device 2 to perform data transfer processing when a first communications unit 211 receives a communication request signal from a communications partner 1 while a second communications unit 212 is operating in a power saving mode. The data transfer processing is processing of transferring data between the second communications unit 212 and the communications partner 1. The communications device 2 includes: the first communications unit 211 to communicate wirelessly with the communications partner 1 by a first communication method; and the second communications unit 212 to communicate wirelessly with the communications partner 1 by a second communication method providing a higher transfer rate than the first communication method does. The second communications unit 212 has a power saving mode in which power consumption per unit time is less than when data is transferred between the second communications unit 212 and the communications partner 1 and a link 32 is established between the second communications unit 212 and the communications partner 1.

Next, variations of the first embodiment described above will be enumerated one after another. Note that any of the variations to be described below may be combined as appropriate.

In the communications system 10 according to the present disclosure, the control unit 22 of the communications device 2, for example, includes a computer system. In that case, the computer system may include, as principal hardware components, a processor and a memory. The functions of the control unit 22 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be either integrated together on a single chip or distributed on multiple chips, whichever is appropriate. Those multiple chips may be integrated together in a single device or distributed in multiple devices without limitation.

Also, in the embodiment described above, the plurality of constituent elements of the communications device 2 are integrated together in a single housing. However, this is not a configuration essential to the communications system 10. Alternatively, those constituent elements of the communications device 2 may be distributed in multiple different housings. Even when a plurality of constituent elements are distributed in multiple different housings, those constituent elements are still able to serve as the communications device 2 in conjunction with each other when connected together via a network such as the Internet. Still alternatively, at least some functions of the communications device 2 may be implemented as a server or a cloud computing system as well. Conversely, the plurality of functions distributed in multiple devices such as the communications partner 1 and the communications device 2 may be integrated as parts of the communications system 10, along with the other constituent elements of the communications system 10, in a single housing.

Furthermore, in the communications system 10, the communications devices 2 do not have to be used as "slave devices" and the communications partner 1 does not have to be used as a "master device." Alternatively, any of the communications devices 2 may be used as a "master device" and the communications partner 1 may be used as a "slave device." Still alternatively, the communications devices 2 and the communications partner 1 may be used in a communications system 10 in which there is no distinction between master and slave devices.

Furthermore, the second communication method just needs to provide a higher transfer rate than the first communication method does. The first communication method does not have to be compliant with the SRD standard and the second communication method does not have to be compliant with the Wi-Fi® standard. Alternatively, the second communication method may be compliant with the Bluetooth® standard or the Digital Enhanced Cordless Telecommunications (DECT) standard, for example. As used herein, the DECT standard includes DECT-ULE (Ultra Low Energy). The communication between the communications partner 1 and the surveillance device 3 does not have to be wired communication but may be wireless communication as well.

Furthermore, in the communications system 10, the communications partner 1 does not have to operate with the power supplied from an external power supply. Alternatively, the communications partner 1 may also be driven by a battery. Furthermore, in the communications system 10 described above, not all of the plurality of communications devices 2 have to be driven by a battery. Alternatively, at least some of the plurality of communications devices 2 may also be configured to operate with the power supplied from an external power supply. Even so, cutting down the power consumption of the communications devices 2 is also beneficial from the standpoint of energy saving.

Furthermore, the communications between the communications partner 1 and the communications devices 2 do not have to be established by two communication methods but may also be established by three or more communication methods. For example, if three communication methods A, B, and C are available, then the communications devices 2 may use the communication method A as a first communication method and the communication method B or C as a second communication method to establish communication with the communications partner 1. It suitably depends on the content of the data to be transferred by the second communication method whether the second communication method should be the communication method B or the communication method C.

Furthermore, the first communications unit 211 and the second communications unit 212 may be each implemented as a single chip or may also be implemented as two different packages. Optionally, the first communications unit 211, the second communications unit 212, and the control unit 22, for example, may be implemented as a single chip. The same statement applies to the first wireless unit 111 and second wireless unit 112 of the communications partner 1 as well.

Furthermore, in the communications system 10, the first communications unit 211 does not have to receive the signals from the communications partner 1 in the first reception periods Ts1, which are set regularly at the first time intervals T1, each of which is shorter than the second time interval T2. Alternatively, the first communications unit 211 may receive the signals from the communications partner 1 in the first reception periods Ts1, which are set regularly at the first time intervals T1, each of which is equal to or longer than the second time interval T2. Still alternatively, the first communications unit 211 may even receive the signals from the communications partner 1 continuously.

Furthermore, in the communications system 10, the first communications unit 211 does not have to determine whether or not any signal has come from the communications partner 1 in each of the first reception periods Ts1. Alternatively, the first communications unit 211 may receive data from the communications partner 1 in each of the first reception periods Ts1.

### (Second embodiment)

In each of the communications devices 2 according to a second embodiment, the second communications unit 212 performs the data transfer processing with its operation mode unchanged from the power saving mode, which is a major difference from the communications devices 2 according to the first embodiment. In the following description, any constituent element of this second embodiment, having the same function as a counterpart of the first embodiment described above, will be designated by the same reference numeral as that counterpart's, and description thereof will be omitted herein as appropriate.

Specifically, in this embodiment, on receiving a control command, the second communications unit 212 performs the data transfer processing of transferring data to (the second wireless unit 112 of) the communications partner 1 with its operation mode unchanged from the power saving mode. In the power saving mode (power save mode) in which the second communications unit 212 periodically alternates between an awake state and an asleep state, the second communications unit 212 turns temporarily awake during a period, in which the second communications unit 212 should be asleep, thus getting ready to perform the data transfer processing.

As can be seen, the communications device 2 according to this embodiment performs the data transfer processing with the operation mode of the second communications unit 212 unchanged from the power saving mode, i.e., without changing the operation mode of the second communications unit 212 into the normal mode, thus further cutting down the power consumption per unit time of the communications device 2.

Optionally, the configuration described for the second embodiment may be combined as appropriate with the configuration described for the first embodiment (including variations thereof).

### (Resume)

As can be seen from the foregoing description, a communications device (2) according to a first aspect includes a first communications unit (211) and a second communications unit (212). The first communications unit (211) communicates wirelessly with a communications partner (1) by a first communication method. The second communications unit (212) communicates wirelessly with the communications partner (1) by a second communication method providing a higher transfer rate than the first communication method does. The second communications unit (212) has a power saving mode. In the power saving mode, power consumption per unit time is less than when data is transferred between the second communications unit (212) and the communications partner (1) and a link (32) is established between the second communications unit (212) and the communications partner (1). When the first communications unit (211) receives a communication request signal from the communications partner (1) while the second communications unit (212) is operating in the power saving mode, the communications device (2) starts performing data transfer processing of transferring data between the second communications unit (212) and the communications partner (1).

This aspect allows, even while the second communications unit (212) is operating in a power saving mode, the communications device (2) to keep a link (32) established between the second communications unit (212) and the communications partner (1). This eliminates the need for the communications device (2) to perform the processing of establishing the link (32) between the second communications unit (212) and the communications partner (1) after the first communications unit (211) has received a communication request signal from the communications partner (1) while the second communications unit (212) is operating in the power saving mode. This allows the communications device (2) to shorten a time delay caused to make the second communications unit (212) ready to start the data transfer processing since the first communications unit (211) has received the communication request signal from the communications partner (1). Consequently, the communications device (2) is able to cut down the power consumption of the second communications unit (212) and to make the data transfer ready to start in a shorter time while increasing the data transfer rate using the second communications unit (212).

In a communications device (2) according to a second aspect, which may be implemented in conjunction with the first aspect, the second communications unit (212) has, as its operation modes, not only the power saving mode but also a normal mode in which power consumption per unit time is more than in the power saving mode. The second communications unit (212) performs the data transfer processing with the operation mode thereof changed from the power saving mode to the normal mode.

This aspect allows the data transfer processing to be performed relatively easily by changing the operation mode of the second communications unit (212) from the power saving mode to the normal mode.

In a communications device (2) according to a third aspect, which may be implemented in conjunction with the first aspect, the second communications unit (212) has, as its operation modes, not only the power saving mode but also a normal mode in which power consumption per unit time is more than in the power saving mode. The second communications unit (212) performs the data transfer processing with the operation mode thereof unchanged from the power saving mode.

This aspect further cuts down the power consumption of the second communications unit (212) before and after the data transfer processing, since the data transfer processing is performed with the operation mode of the second communications unit (212) unchanged from the power saving mode.

In a communications device (2) according to a fourth aspect, which may be implemented in conjunction with any one of the first to third aspects, the second communications unit (212) receives, while operating in the power saving mode, signals from the communications partner (1) in second reception periods (Ts2) that are set regularly at second time intervals (T2).

This aspect cuts down the power consumption of the second communications unit (212) by making the second communications unit (212) perform the reception operation intermittently while operating in the power saving mode.

In a communications device (2) according to a fifth aspect, which may be implemented in conjunction with the fourth aspect, the first communications unit (211) receives signals from the communications partner (1) in first reception periods (Ts1) that are set regularly at first time intervals (T1) that are shorter than the second time intervals (T2).

This aspect cuts down the power consumption of the first communications unit (211) by making the first communications unit (211) perform the reception operation intermittently.

In a communications device (2) according to a sixth aspect, which may be implemented in conjunction with the fifth aspect, the first communications unit (211) determines, in each of the first reception periods (Ts1), whether or not any signal has come from the communications partner (1), and also starts, when detecting any signal received from the communications partner (1) during the first reception period (Ts1), receiving data from the communications partner (1) in a predetermined amount of time (T3) after the first reception period (Ts1).

This aspect further cuts down the power consumption of the first communications unit (211) because a decision just needs to be made whether or not any signal has come from the communications partner (1) while the first communications unit (211) is performing the reception operation intermittently.

In a communications device (2) according to a seventh aspect, which may be implemented in conjunction with any one of the first to sixth aspects, the second communications unit (212) transmits, during the data transfer processing, response data to the communications partner (1). The response data is transmitted in response to a control command included in the communication request signal.

This aspect allows the data transfer to be started in a shorter time than when a control command is transmitted separately from the communication request signal, because the control command is transmitted to be included in the communication request signal.

A communications system (10) according to an eighth aspect includes: the communications device (2) according to any one of the first to seventh aspects: and the communications partner (1).

This aspect allows, even while the second communications unit (212) is operating in a power saving mode, the communications system (10) to keep a link (32) established between the second communications unit (212) and the communications partner (1). This eliminates the need for the communications system (10) to perform the processing of establishing the link (32) between the second communications unit (212) and the communications partner (1) after the first communications unit (211) has received a communication request signal from the communications partner (1) while the second communications unit (212) is operating in the power saving mode. This allows the communications system (10) to shorten the time delay caused to make the second communications unit (212) ready to start the data transfer processing since the first communications unit (211) has received the communication request signal from the communications partner (1). Consequently, the communications system (10) is able to cut down the power consumption of the second communications unit (212) and to make the data transfer ready to start in a shorter time while increasing the data transfer rate using the second communications unit (212).

A program according to a ninth aspect is designed to cause a computer system for controlling a communications device (2) to perform data transfer processing when a first communications unit (211) receives a communication request signal from a communications partner (1) while a second communications unit (212) is operating in a power saving mode. The data transfer processing is processing of transferring data between the second communications unit (212) and the communications partner (1). The communications device (2) includes: the first communications unit (211) to communicate wirelessly with the communications partner (1) by a first communication method; and the second communications unit (212) to communicate wirelessly with the communications partner (1) by a second communication method providing a higher transfer rate than the first communication method does. The second communications unit (212) has the power saving mode in which power consumption per unit time is less than when data is transferred between the second communications unit (212) and the communications partner (1) and a link (32) is established between the second communications unit (212) and the communications partner (1).

This aspect allows, even while the second communications unit (212) is operating in a power saving mode, the communications device (2) to keep a link (32) established between the second communications unit (212) and the communications partner (1). This eliminates the need for the communications device (2) to perform the processing of establishing the link (32) between the second communications unit (212) and the communications partner (1) after the first communications unit (211) has received a communication request signal from the communications partner (1) while the second communications unit (212) is operating in the power saving mode. This allows the communications device (2) to shorten the time delay caused to make the second communications unit (212) ready to start the data transfer processing since the first communications unit (211) has received the communication request signal from the communications partner (1). Consequently, this program is able to cut down the power consumption of the second communications unit (212) and to make the data transfer ready to start in a shorter time while increasing the data transfer rate using the second communications unit (212).

Note that these aspects are only exemplary aspects of the present disclosure. Various configurations (including their variations) for the communications system (10) according to the first and second embodiments described above may also be implemented, for example, as a (computer) program or a non-transitory storage medium on which the program is stored.

Also, the constituent elements according to the second to seventh aspects are not essential constituent elements for the communications system (10) but may be omitted as appropriate.

### Reference Signs List

- 1: Communications Partner
- 2: Communications Device
- 10: Communications System
- 32: Link
- 211: First Communications Unit
- 212: Second Communications Unit
- T1: First Time Interval
- T2: Second Time Interval
- T3: Predetermined Time
- Ts1: First Reception Period
- Ts2: Second Reception Period

## Claims

1. A communications device comprising:
a first communications unit configured to communicate wirelessly with a communications partner by a first communication method; and
a second communications unit configured to communicate wirelessly with the communications partner by a second communication method providing a higher transfer rate than the first communication method does,
the second communications unit having a power saving mode in which power consumption per unit time is less than when data is transferred between the second communications unit and the communications partner, and a link is established between the second communications unit and the communications partner,
the communications device being configured to, when the first communications unit receives a communication request signal from the communications partner while the second communications unit is operating in the power saving mode, start performing data transfer processing of transferring data between the second communications unit and the communications partner.

2. The communications device of claim 1, wherein
the second communications unit has, as its operation modes, not only the power saving mode but also a normal mode in which power consumption per unit time is more than in the power saving mode, and
the second communications unit is configured to perform the data transfer processing with the operation mode thereof changed from the power saving mode to the normal mode.

3. The communications device of claim 1, wherein
the second communications unit has, as its operation modes, not only the power saving mode but also a normal mode in which power consumption per unit time is more than in the power saving mode, and
the second communications unit is configured to perform the data transfer processing with the operation mode thereof unchanged from the power saving mode.

4. The communications device of any one of claims 1 to 3, wherein
the second communications unit is configured to, while operating in the power saving mode, receive signals from the communications partner in second reception periods that are set regularly at second time intervals.

5. The communications device of claim 4, wherein
the first communications unit is configured to receive signals from the communications partner in first reception periods that are set regularly at first time intervals that are shorter than the second time intervals.

6. The communications device of claim 5, wherein
the first communications unit is configured to determine, in each of the first reception periods, whether or not any signal has come from the communications partner, and is also configured to, when detecting any signal received from the communications partner during the first reception period, start receiving data from the communications partner in a predetermined amount of time after the first reception period.

7. The communications device of any one of claims 1 to 6, wherein
the second communications unit is configured to transmit, during the data transfer processing, response data to the communications partner, the response data being transmitted in response to a control command included in the communication request signal.

8. A communications system comprising:
the communications device of any one of claims 1 to 7: and
the communications partner.

9. A program designed to cause a computer system to perform data transfer processing,
the computer system being configured to control a communications device, the communications device comprising:
a first communications unit configured to communicate wirelessly with a communications partner by a first communication method; and
a second communications unit configured to communicate wirelessly with the communications partner by a second communication method providing a higher transfer rate than the first communication method does,
the second communications unit having a power saving mode in which power consumption per unit time is less than when data is transferred between the second communications unit and the communications partner and a link is established between the second communications unit and the communications partner,
the data transfer processing being processing of starting, when the first communications unit receives a communication request signal from the communications partner while the second communications unit is operating in the power saving mode, transferring data between the second communications unit and the communications partner.
